# EUROPÄISCHE PATENTSCHRIFT

(11) **EP 2 385 211 B1**
(45) Veröffentlichungstag und Bekanntmachung des Hinweises auf die Patenterteilung: **22.11.2017**
(21) Anmeldenummer: 11003671.2
(22) Anmeldetag: 05.05.2011
(51) Int. Cl.: E06C 1/387, B60R 3/02, E06C 5/02

(54) **Treppenleiter mit Treppenstufen**
Step ladder with steps
Escabeau doté de marches

(30) Priorität: 05.05.2010 DE 102010019569
(43) Veröffentlichungstag der Anmeldung: 09.11.2011
(73) Patentinhaber: PWP SA, CH-1530 Payerne (CH)
(72) Erfinder: Gijsbers, Erik, 3232 Ins (CH)
(74) Vertreter: Müller, Enno

(56) Entgegenhaltungen:
- AU-A1- 2005 200 785
- FR-A1- 2 635 817
- JP-U- S59 151 748
- US-A- 3 469 654
- US-A1- 2009 020 360

## Beschreibung

Die Erfindung betrifft eine Treppenleiter mit Treppenstufen nach den Merkmalen des Oberbegriffes des Anspruches 1.

### Derartige Treppenleitern sind bekannt.

Die KR 10 2003 005 0368 AA beschreibt hierzu eine Treppenleiter, die aus einem Aufbewahrungsraum eines Fahrzeugs aus- bzw. in diesen einfahrbar ist. Zu diesem Zweck sind innerhalb des Aufbewahrungsraumes Führungsschienen am Fahrzeug installiert, auf denen entlang ihrer Längsrichtung ein Führungsschlitten verschiebbar angeordnet ist. An einem Ende des Führungsschlittens ist jeweils ein Paar sich gegenüberliegender Holme und ein Paar sich gegenüberliegender Stabilisierungsstangen drehgelenkig angeschlossen. Die Holme und Stabilisierungsstangen sind zur Befestigung von Treppenstufen vorgesehen, die jeweils mit ihren querseitigen Endbereichen an diesen Bauteilen drehgelenkig angeschlagen sind. Die Holme und Stabilisierungsstangen sind zusammen mit den Treppenstufen gegeneinander aus einer im ausgefahrenen Zustand des Führungsschlittens schrägen Gebrauchsstellung der Treppenleiter in eine horizontale Einschiebestellung der Treppenleiter einschwenkbar. Am bodenseitigen Ende der Holme ist ein Feststellhebel vorgesehen, mit welchem die Treppenleiter innerhalb des Aufbewahrungsraums am Fahrzeug arretiert werden kann.

Bei einer aus der JP-S-59151748 U bekannten Treppenleiter gemäß dem Oberbegriff des Anspruchs 1 ist ein fahrzeugseitiges Ende der Treppe unmittelbar in einer Führungsaufnahme des Fahrzeuges aufgenommen. Die Seitenbleche umschließen jeweils in geradlinigem Grundrissverlauf eine Treppenfläche.

Im Weiteren ist noch auf einen Stand der Technik gemäß der
AU 2005/200785 A1 zu verweisen.

Ausgehend von dem genannten Stand der Technik beschäftigt sich die Erfindung mit der Aufgabenstellung, eine günstig ausgebildete Treppe mit Treppenstufen anzugeben.

Diese Aufgabe ist beim Gegenstand des Anspruches 1 gelöst, wobei darauf abgestellt ist, dass die einander zugewandten Bereiche unmittelbar benachbarter Bauteile einen Mindestabstand von 1,8 cm aufweisen und dass die Seitenbleche in ihrer jeweiligen Längsrichtung L-förmig gebogen sind und dass einer der Schenkel der L-Form entgegen der Verschlussrichtung des Seitenbleches hakenartig ausgebildet ist und zur Anbringung der drehgelenkigen Verbindung mit einem der Holme vorgesehen ist. Die Treppenstufen sind als Blechkonstruktion oder Strangpressprofil, z.B. aus Aluminium, und in Seitenansicht U-förmig ausgebildet ausgebildet, wobei zumindest die offenen Querseiten der Blechkonstruktion oder des Strangpressprofils aus Aluminium oder auch z.B. aus Kunststoff mittels Seitenblechen verschlossen werden. Zweckmäßigerweise bildet die rückseitige Fläche dieser Konstruktion die Trittfläche der jeweiligen Treppenstufe. Die Seitenbleche bilden die Längskanten der Treppenstufen und dienen zur Befestigung der drehgelenkigen Verbindung mit den Holmen und Stabilisierungsstangen. Die Seitenbleche sind in ihrer jeweiligen Längsrichtung L-förmig gebogen. Weiter wird hierzu vorgesehen, dass eines der Schenkelenden der L-Form entgegen der Verschlussrichtung des Seitenbleches hakenartig ausgebogen ist und zur Anbringung der drehgelenkigen Verbindung mit einem der Holme vorgesehen wird. Dieses Schenkelende bildet hierbei zweckmäßigerweise eine der Längskanten der Treppenstufe, wobei die hakenartig ausgebogene Form von dieser Längskante endseitig einen Abstand aufweist, der ebenfalls mindestens einer Handdicke entspricht, so dass der erfindungsgemäße Abstand dieser Längskante zu einer zugewandten Längsseite eines angeschlossenen Holms durch die Ausbildung der hakenartigen Form bestimmt wird.

Beim Bewegen einer in Rede stehenden Treppenleiter zwischen ihrer Gebrauchsstellung und ihrer Einschiebestellung besteht die Gefahr von Abscherverletzungen, da die besagten Bauteile der Treppenleiter scherenartig gegeneinander verschwenkt werden. Eine Verletzungsgefahr wird beim Verstellen der Treppenleiter von Hand vermieden, indem zwischen der Einschiebe- und Gebrauchsstellung die einander zugewandten Bereiche unmittelbar benachbarter Bauteile voneinander um mindestens eine Handdicke im Sinne völliger Verletzungsfreiheit beabstandet sind.

Die einander zugewandten Bereiche unmittelbar benachbarter Bauteile (Treppenstufen, Holme und Stabilisierungsstangen) sind voneinander unter Einhaltung eines mindestens so großen Abstandes beabstandet, dass ein Umgreifen der Bauteile im Bereich dieses Abstandes möglich ist, ohne dass dabei eine Gefahr von Handverletzungen insbesondere beim Einschwenken der Treppenleiter in die Einschiebestellung besteht.

Alle Bereiche benachbarter Bauteile, welche Kanten aufweisen, die scherenartig verschwenkbar sind, können durch die Wahl eines Mindestabstandes zueinander im Hinblick auf eine völlige Verletzungsfreiheit entschärft werden. Als völlige Verletzungsfreiheit wird hierbei insbesondere ein Ausbleiben von Abscher-, Quetsch- und Einklemmverletzungen verstanden, die bei einer Beaufschlagung von Körperteilen durch derartig scherenartig gegeneinander verschwenkende Bauteile auftreten. Eine derartige Beaufschlagung wird vermieden.

Das Maß für den Mindestabstand kann beispielsweise einer durchschnittlichen Handbereite von Personen aus einer vorbestimmten Personengruppe entsprechen. Die Personengruppen können beispielsweise nach Personen mit kleinen, mittelgroßen oder großen Handdicken unterteilt sein. Die Erfindung beabsichtigt insbesondere, dass bei einem unabsichtlichen Eingreifen zwischen den scherenartig einschwenkenden Bauteilen der Treppenleiter keine Handverletzungen auftreten. Durch Wahl eines Mindestabstandes von 1,8 cm wird diese Absicht insbesondere bei Kleinkindern in mehr als ausreichendem Maße erfüllt.

Vorzugsweise werden Treppenstufen mit rechteckförmigem Grundriss verwendet, der von zwei Quer- und zwei Längskanten gebildet wird. Es sind einander zugewandte Querkanten von unmittelbar benachbarten Treppenstufen voneinander um ebenfalls mindestens 1,8 cm beabstandet. Durch diese Maßnahme wird ein verletzungsfreies Umgreifen der in Trittrichtung gesehenen Hinter- oder Vorderkanten der Treppenstufen beim Verstellen der Treppenleiter ermöglicht. Die Längskanten der Treppenstufen weisen zur jeweils zugewandten Längsseite eines unmittelbar benachbarten Holms einen Abstand auf, der ebenfalls mindestens 1,8 cm beträgt. Durch dies Maßnahme können die Holme bzw. die rechten oder linken Endseiten der Treppenstufen umgriffen werden, ohne dass hierbei die Gefahr von Abscher-, Quetsch- oder Einklemmverletzungen besteht. Gleiches gilt für Längskanten, die jeweils zur zugewandten Längsseite einer unmittelbar benachbarten Stabilisierungsstange einen Abstand aufweisen, der ebenfalls mindestens einer Handdicke entspricht. Die einander zugewandte und unmittelbar benachbarte Längsseiten eines Holms und einer Stabilisierungsstange sind voneinander ebenfalls um mindestens 1,8 cm beabstandet. Bedingt durch eine von der Treppenleiter zu überwindende Einstiegshöhe können die drehgelenkig angeschlagenen Holme und Stabilisierungsstangen jeweils einen entsprechend langen Hebelarm aufweisen, der mehrere Meter betragen kann. Hierdurch sind theoretisch besonders kritische Abscher- und Quetschkräfte an den gegenüberliegenden und scherenartig einschwenkenden Längsseiten möglich, die jedoch aufgrund des erfindungsgemäßen Mindestabstandes beim Umgreifen ihrer Bauteile nicht zum Tragen kommen können. Auch an derartig kritischen Stellen der Treppenleiter können diese Bauteile umfasst werden, ohne dass hierbei Einklemm-, Quetsch- und insbesondere Abscherverletzungen auftreten.

Als zusätzliche Sicherheitsmaßnahme wird darüber hinaus vorgeschlagen, dass die Stabilisierungsstangen gegenüber ihren unmittelbar benachbarten Holmen in Trittrichtung gesehen nach innen versetzt sind. Vorzugsweise werden die Stabilisierungsstangen an den hinteren Querkanten der Treppenstufen befestigt. Hierzu wird weiter vorgeschlagen, dass die Stabilisierungsstangen gegenüber ihren unmittelbar benachbarten Holmen mit einem Abstand nach innen versetzt sind, der mindestens einer doppelten Handdicke im Sinne der Erfindung entspricht.

Aus der Erfindung ergibt sich die Möglichkeit, die Treppenleiter in der Einschiebestellung besonders flach auszuführen. Hierzu ist denkbar, dass die Treppenstufen mit ihren jeweiligen Unterseiten in der Einschiebestellung in horizontaler Ausrichtung gegen die Oberseite der Stabilisierungsstangen angeschwenkt sind und mit ihren Trittflächen auf einer gemeinsamen Horizontalebene liegen. Eine derartige Ausführungsform wird insbesondere durch die erfindungsgemäße Wahl eines Mindestabstandes begünstigt, da sich die jeweils einander zugewandten Querseiten der Treppenstufen bei einer konsequenten Wahl des Mindestabstandes in der Einschiebestellung nicht überlappen können.

Ergänzend hierzu wird vorgeschlagen, dass die Holme an den Längskanten der Treppenstufen befestigt sind und die Einschiebestellung in die Führungsschiene des Aufbewahrungsraums einschiebbar sind, wobei die Holme in Trittrichtung gesehen vorzugsweise mit ihren vorderen Längskanten auf etwa dem gleichen Niveau mit der Horizontalebene der Trittstufen liegen. Durch diese Maßnahme kann der benötigte Aufbewahrungsraum zum vollständigen Einfahren der Trittleiter besonders flach ausgeführt werden und beispielsweise unterhalb einer Ladefläche eines LKW oder sogar innerhalb einer derartigen Ladefläche integriert werden.

Das andere Schenkelende der L-Form kann beispielsweise in Trittrichtung gesehen an der hinteren Querkante der Treppenstufe anliegen und entgegen der Verschlussrichtung des Seitenbleches laschenartig ausgebogen sein, um zur Anbringung der drehgelenkigen Verbindung mit einer der Stabilisierungsstangen zu dienen. Vorzugsweise weist die laschenartig ausgebogene Form des Schenkelendes eine in Richtung zur Unterseite der Treppenstufe gerichtete und über die Unterseite herausragende Nase auf, welche zur Anbringung der drehgelenkigen Verbindung für die Stabilisierungsstange dient.

Als drehgelenkige Verbindungen werden vorzugsweise Schraubverbindungen oder Nietverbindungen vorgeschlagen.

Um insbesondere die erfindungsgemäße Treppenleiter gegen ein unbeabsichtigtes Umgreifen ihrer Bauteile in ergänzender Weise abzusichern, wird vorgeschlagen, dass die Holme an ihren bodenseitigen Enden jeweils einen quer zu ihrer Längsrichtung abstehenden Griff aufweisen. Durch diese Maßnahme wird eine Zweihandbedienung der Treppenleiter begünstigt. Zu diesem Zweck sind die Griffe einander zugewandt, so dass die Griffe in einer ergonomisch vorteilhaften Position gegriffen werden können.

Vorzugsweise bestehen zumindest die Holme aus Aluminiumprofilen. Der Vorteil hierbei liegt insbesondere darin, dass zum Erreichen einer Korrosionsbeständigkeit insbesondere die tragenden Teile der Treppenleiter nicht verzinkt werden müssen und dass die Treppenleiter nur ein geringes Gewicht aufweist.

Im Folgenden wird die Erfindung anhand von Ausführungsbeispielen näher erläutert.

Es zeigen:
- Fig. 1: eine erfindungsgemäße Treppenleiter in einer schräg von oben gezeigten, dreidimensionalen Draufsicht
- Fig. 1a: eine Detailansicht gem. Fig. 1
- Fig. 2: die Treppenleiter gem. Fig. 1 in Gebrauchsstellung, dargestellt in einer dreidimensionalen Vorderansicht
- Fig. 2a: eine Detailansicht gem. Fig. 2
- Fig. 3: die Treppenleiter gem. Fig. 1 in Einschiebestellung, dargestellt in einer senkrechten Draufsicht
- Fig. 3a: eine Seitenansicht der Treppenleiter gem. Fig. 3
- Fig. 3b: eine Detailansicht gem. Fig. 3
- Fig. 4: die Treppenleiter gem. Fig. 1 in Gebrauchsstellung, dargestellt in Seitenansicht
- Fig. 4a: eine Detailansicht gem. Fig. 4
- Fig. 5: ein Anwendungsbeispiel für eine erfindungsgemäße Treppenleiter

Sofern im Folgenden nichts anderes gesagt ist, gilt die folgende Beschreibung stets für alle Figuren.

Die Figuren zeigen eine erfindungsgemäße Treppenleiter 1 mit Treppenstufen 2, die jeweils mit ihren querseitigen Endbereichen an einem Paar sich gegenüberliegender Holme und einem Paar sich gegenüberliegender Stabilisierungsstangen drehgelenkig angeschlagen sind.

Die Stabilisierungsstangen 4 und die Holme 3 sind mit ihren jeweiligen Enden drehgelenkig mit einem Führungsschlitten 5 verbunden.

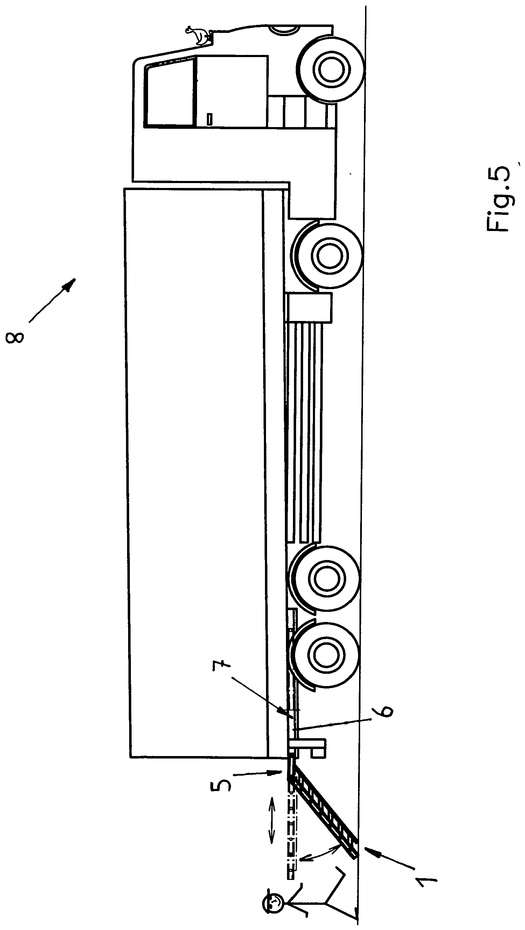

Insbesondere Fig. 5 zeigt, dass der Führungsschlitten 5 zusammen mit den Stabilisierungsstangen 4 und den Holmen 3 auf Führungsschienen 6 laufend in einem Aufbewahrungsraum 7 eines Fahrzeugs 8 ein- und ausfahrbar gelagert ist. Die Führungsschienen 6 sind fester Bestandteil des Fahrzeugrahmens.

Zu diesem Zweck sind die Stabilisierungsstangen 4 und die Holme 3 parallel zueinander angeordnet und zusammen mit den Treppenstufen 2 gegeneinander aus einer im ausgefahrenen Zustand des Führungsschlittens 5 schrägen Gebrauchsstellung 9 der Treppenleiter 1 in eine horizontale Einschiebestellung 10 der Treppenleiter 1 einschwenkbar. In der Gebrauchsstellung 9 ist der Führungsschlitten außerhalb des Fahrzeugs 8 angeordnet und dient als oberste Trittfläche, welche an der Ladefläche angrenzt.

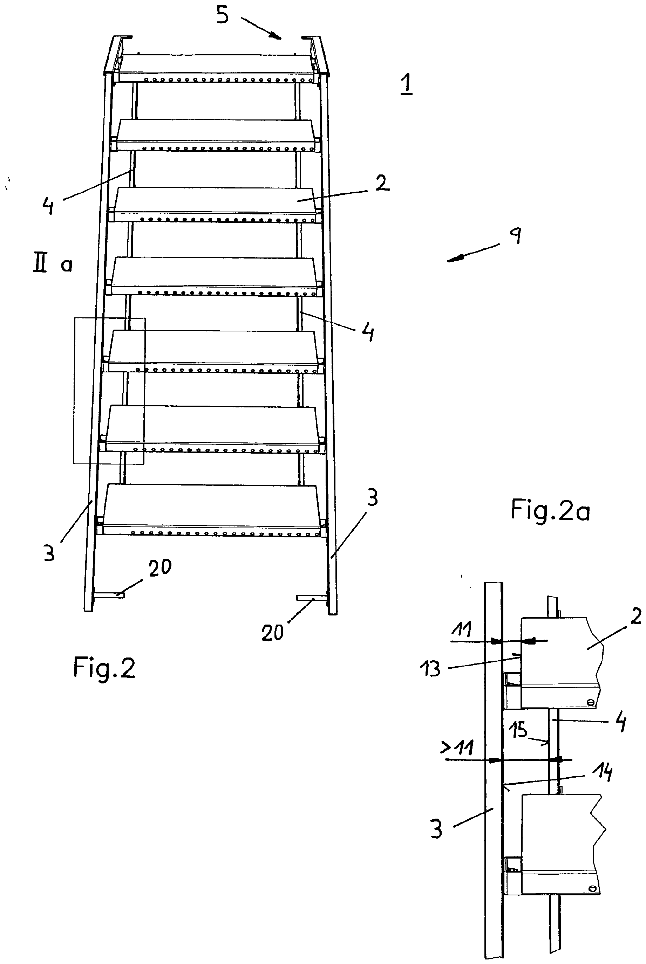

Insbesondere die Fig. 2, 4 und 5 zeigen die Treppenleiter 1 in der schrägen Gebrauchsstellung 9. Die Holme 3 sind mit ihren bodenseitigen Enden in der Gebrauchsstellung 9 auf dem Boden aufgesetzt. Die Holme 3 übertragen die beim Betreten der Treppenstufen 2 auftretenden Belastungskräfte in Richtung Boden, wobei die Stabilisierungsstangen 4 hierbei ein Verdrehen der Treppenstufen 2 um ihre drehgelenkige Verbindung mit den Holmen 3 verhindern.

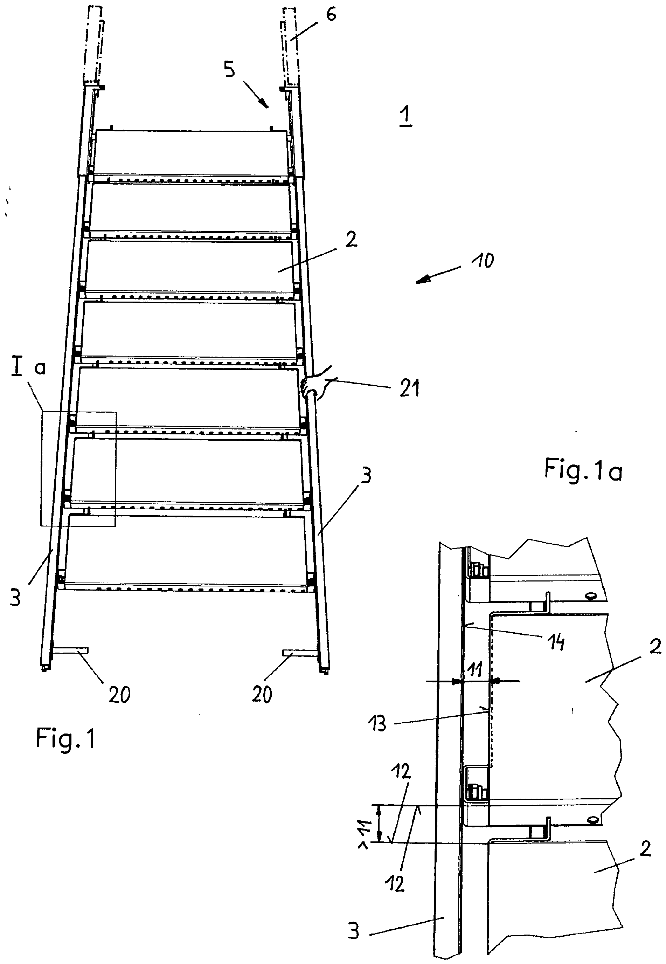

Insbesondere die Fig. 1, 2 und 5 zeigen die Treppenleiter 1 in der horizontalen Einschiebestellung 10. Beim Einschwenken von der Gebrauchsstellung 9 in die Einschiebestellung 10 bewegen sich beispielsweise die Längsseiten 14 der Holme 3 gegen die Längsseiten 15 der unmittelbar benachbarten Stabilisierungsstangen 4 scherenartig gegeneinander. Gleiches gilt zum Beispiel für die Längskanten 13 der Treppenstufen 2, welche jeweils gegen die Längsseite 14 des unmittelbar benachbarten Holms 3 bzw. gegen die Längsseite 15 der unmittelbar benachbarten Stabilisierungsstange 4 verschwenkt werden, sowie für die einander zugewandten Querkanten 12 von unmittelbar benachbarten Treppenstufen 2.

Insbesondere in Fig. 1 wird dargestellt, dass die besagten Bauteile der erfindungsgemäßen Treppenleiter 1 umfasst werden können, ohne dass hierbei die Hand 21 einer Person von den scherenartig einschwenkenden Bereiche beaufschlagt wird. Dies wird erfindungsgemäß erreicht, indem zwischen der Einschiebe- und Gebrauchsstellung 10, 9 die einander zugewandten Bereiche 12, 13, 14, 15 unmittelbar benachbarter Bauteile 2, 3, 4, 5 voneinander um mindestens 1,8 cm im Sinne völliger Verletzungsfreiheit beabstandet sind.

Hierdurch sind die einander zugewandten Bereiche 12, 13, 14, 15 der unmittelbar benachbarten Bauteile 3, 4, 5 unter Einhaltung eines Mindestabstandes voneinander beabstandet, sodass ein Umgreifen der Bauteile im Bereich dieses Mindestabstandes möglich ist, ohne dass dabei eine Gefahr von Handverletzungen beim Verschwenken der Treppenleiter 1 besteht.

Als Handverletzungen werden hierbei insbesondere behandlungsbedürftige Abscher-, Quetsch- und Einklemmverletzungen verstanden, die durch Beaufschlagung von scherenartig gegeneinander verschwenkten Bauteilen möglich sind, jedoch aufgrund des erfindungsgemäßen Mindestabstandes nicht auftreten können.

Das Maß für den Mindestabstand entspricht hierbei einer gemittelten Handdicke, die aus einer Vielzahl von gemessenen Handdicken von Personen bestimmt wurde. Der Mindestabstand beträgt 1,8 cm. Ein derartig bemessener Mindestabstand stellt sicher, dass insbesondere die Handdicken 11 von Kleinkindern in mehr als ausreichendem Maße berücksichtigt werden.

Insbesondere die Fig. 1a und 2 zeigen, dass die Treppenstufen 2 Querkanten 12 aufweisen, wobei einander zugewandte Querkanten 12 von unmittelbar benachbarten Treppenstufen 2 voneinander ebenfalls um mindestens 1,8cm beabstandet sind. In diesem Beispiel sind die besagten Querkanten 12 sogar über diese Handdicke 11 voneinander beabstandet. Diese Maßnahme stellt sicher, dass die Treppenstufen 2 an ihren hinteren oder vorderen Querkanten 12 beim Verstellen der Treppenleiter 1 völlig verletzungsfrei umfasst werden können.

Ergänzend hierzu zeigen insbesondere die Figuren 1a, 2a und 3, dass die Endbereiche der Treppenstufen 2 Längskanten 13 aufweisen, wobei die Längskanten 13 zur jeweils zugewandten Längsseite 14 eines unmittelbar benachbarten Holms 3 einen Abstand aufweisen, der ebenfalls mindestens 1,8cm entspricht. Im Bereich dieses Abstandes ist ein Umgreifen der Holme 3 oder der Längskanten 13 beim Verstellen der Treppenleiter 1 möglich, ohne dass dabei eine Gefahr von Handverletzungen besteht.

Darüber hinaus zeigen die Figuren, dass die Längskanten 13 zur jeweils zugewandten Längsseite 15 einer unmittelbar benachbarten Stabilisierungsstange 4 einen Abstand aufweisen, der ebenfalls mindestens 1,8 cm entspricht. Dies hat insbesondere den Vorteil, dass die Längskanten 13 der Treppenstufen 2 auch im Bereich der Stabilisierungsstangen 4 verletzungsfrei umfasst werden können.

Weiterhin sind die einander zugewandten und unmittelbar benachbarten Längsseiten 14, 15 des rechten und linken Holms 3 und der rechten und linken Stabilisierungsstange 4 voneinander ebenfalls um mindestens 1,8 cm beabstandet. Hierzu zeigt insbesondere Fig. 2a, dass die Längsseiten 14, 15 um mehr als der doppelten Handdicke 11 15 um mehr als der doppelten Handdicke 11 voneinander beabstandet sind. Bedingt durch eine von der Treppenleiter 1 zu überwindende Einstiegshöhe zum Erreichen der Ladefläche des in Fig. 5 gezeigten Fahrzeugs 8, weisen die drehgelenkig angeschlagenen Holme 3 und Stabilisierungsstangen 4 jeweils einen Hebelarm auf, der weit mehr als 1 Meter betragen kann. Die gegeneinander gerichteten Längsseiten 14, 15 der unmittelbar benachbarten Holme 3 und Stabilisierungsstangen 4 bilden Scherkanten, die jedoch erfindungsgemäß durch Wahl eines Mindestabstandes von 1,8cm, in diesem Fall sogar einer doppelten Handdicke 11, entschärft sind. Diese Scherkanten können insbesondere ohne die Gefahr des Abscherens beim Feststellen der Treppenleiter 1 umgriffen werden. In diesem Fall sogar mit mehr als doppelter Sicherheit.

Darüber hinaus sind die Stabilisierungsstangen 4 gegenüber ihren unmittelbar benachbarten Holmen 3 in Trittrichtung gesehen nach innen versetzt. Die Stabilisierungsstangen 4 sind an den hinteren Querkanten 12 der Treppenstufen 2 angebracht. Die Holme 3 der Treppenleiter 1 weisen in Trittrichtung gesehen nach außen.

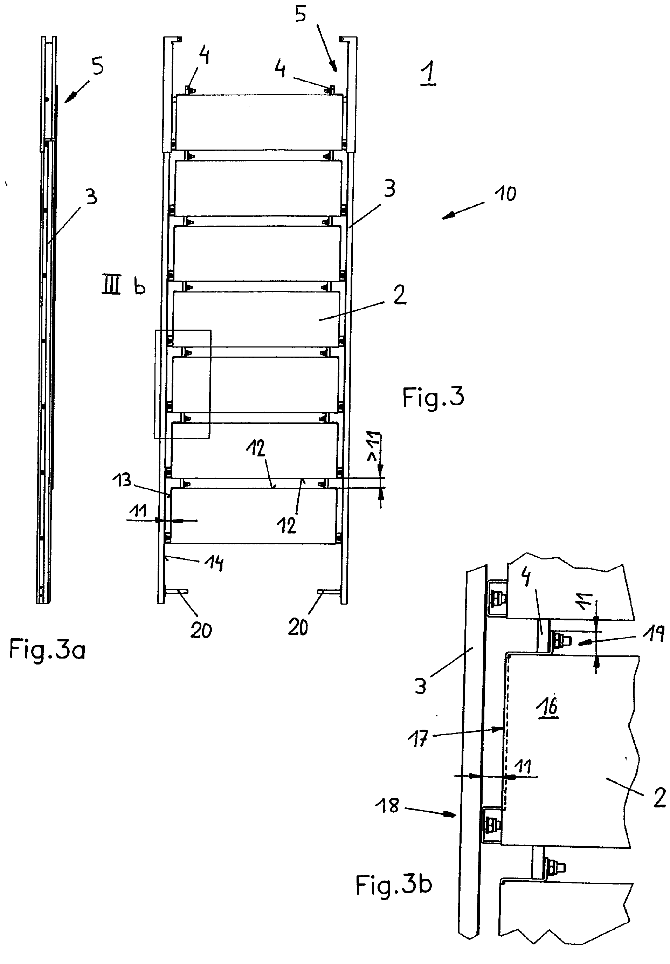

Durch diese Maßnahme sind die Treppenstufen 2 mit ihren jeweiligen Unterseiten in ihrer Einschiebestellung 10 in horizontaler Ausrichtung gegen die Oberseite der Stabilisierungsstangen 4 angeschwenkt und liegen mit ihren Trittflächen auf einer gemeinsamen Horizontalebene. Die Holme 3 und der Führungsschlitten 5 liegen mit ihren in Trittrichtung gesehenen Längsseiten in der Einschiebestellung 10 bis auf wenige Millimeter genau auf der Höhe der von den Trittflächen gebildeten gemeinsamen Horizontalebene. Dies wird insbesondere in Fig. 3a dargestellt.

Insbesondere Fig. 1 zeigt, dass die Treppenleiter 1 in der Einschiebestellung 10 ausschließlich mit ihren Holmen 3 in die Führungsschienen 6 einschiebbar ist. Insbesondere Fig. 5 zeigt, dass der Aufbewahrungsraum 7 zum vollständigen Einschieben der Treppenleiter 1 im Wesentlichen von der Länge der Holme 3 und der Länge des Führungsschlittens 5 bestimmt wird, sowie von der Höhe dieser Bauteile 3, 5. Lediglich die Stabilisierungsstangen 4 ragen wenige Millimeter über diese Höhe in den Aufbewahrungsraum 7 hinein. Durch konsequente Wahl eines erfindungsgemäßen Mindestabstandes für alle kritischen, einander zugewandten Bereiche 12, 13, 14, 15 von unmittelbar benachbarten Bauteilen 2, 3, 4, 5, die scherenartig gegeneinander einschwenkbar sind, werden zum einen diese Bereiche erfindungsgemäß entschärft und zum anderen stellt sich die vorteilhafte besonders flache Einschiebeform der Treppenleiter 1 ein. Die Treppenleiter 1 kann beispielsweise problemlos unterhalb einer Ladefläche eines LKW 8 in einen entsprechend flachen Aufbewahrungsraum 7 eingeschoben werden. Darüber hinaus wäre es sogar denkbar, dass eine erfindungsgemäße Treppenleiter 1 innerhalb der Ladefläche integriert wird.

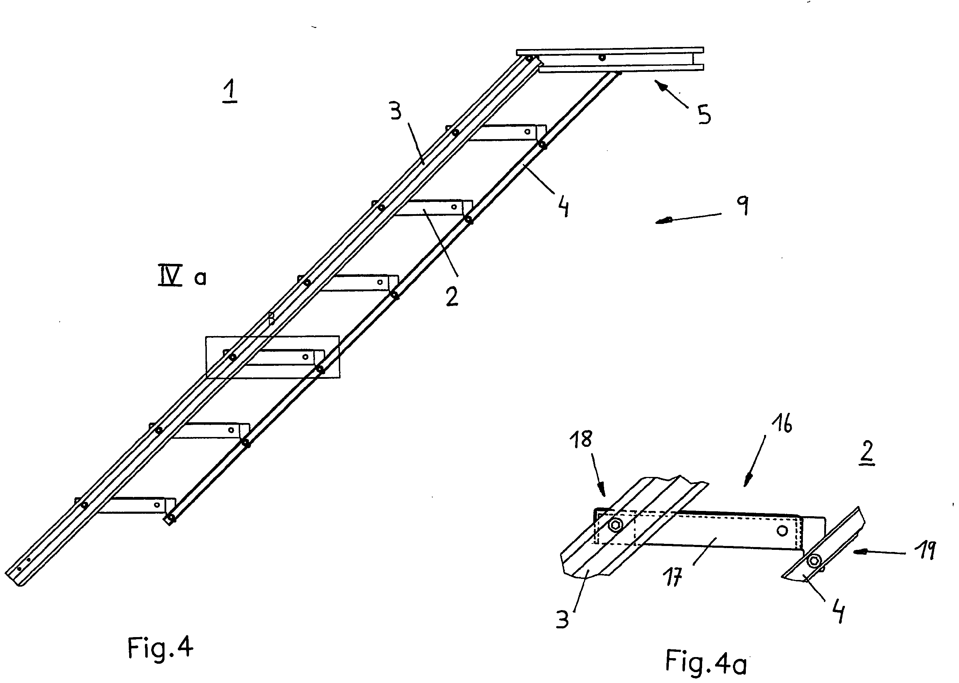

Insbesondere die Figuren 1a, 3b und 4a zeigen, dass die Treppenstufen 2 jeweils aus einer Blechkonstruktion 16 bestehen. Insbesondere Fig. 4a zeigt, dass die Blechkonstruktion oder der Abschnitt von einem Aluminium- oder Kunststoffstrangpressprofil 16 in Seitenansicht U-förmig ausgebildet ist. Die Schenkel der U-Form bilden in Trittrichtung gesehen jeweils eine hintere und eine vordere Querkante 12 der Treppenstufe 2. Zur drehgelenkigen Anbringung der jeweiligen querseitigen Endbereiche der Treppenstufe 2 sind die offenen Querseiten der Blechkonstruktion 16 mittels Seitenbleche 17 verschlossen.

Die Seitenbleche 17 dienen zur drehgelenkigen Anbindung der Treppenstufen 2 mit den Holmen 3 und den Stabilisierungsstangen 4.

Die Seitenbleche 17 sind in ihrer jeweiligen Längsrichtung L-förmig gebogen. Eines der Schenkelenden 18 der L-Form ist zum Verschließen der offenen Querseiten der Blechkonstruktion oder des Abschnitts eines Strangpressprofils 16 vorgesehen und mit seiner Länge an deren Länge angepasst. Entgegen der Verschlussrichtung des Seitenbleches 17 ist dieses Schenkelende 18 hakenartig ausgebogen. In Trittrichtung der Treppenstufen 2 gesehen, befindet sich die hakenartig ausgebogene Form des Schenkelendes 18 im Bereich einer vorderen Querkante 12 der Treppenstufe 2 und ist zur Anbringung der drehgelenkigen Verbindung mit einem der Holme 3 vorgesehen. Die Höhe der Hakenform entspricht ebenfalls mindestens einer Handdicke 11. Hierdurch können die Treppenstufen 2, unter Einhaltung des erfindungsgemäßen Mindestabstandes zwischen den Holmen 3, in ihrer Querrichtung unverrückbar gehalten werden.

Das andere Schenkelende 19 der L-Form ist entgegen der Verschlussrichtung laschenartig ausgebogen. Das Schenkelende 19 liegt in Trittrichtung der Treppenstufe 2 gesehen an ihrer hinteren Querkante 12 an und ist zur Anbringung der drehgelenkigen Verbindung mit einer der Stabilisierungsstangen 4 vorgesehen. Dies wird insbesondere in Fig. 3b gezeigt. Insbesondere Fig. 4 und 4a zeigt hierzu, dass das laschenartige Schenkelende 19 einer jeweiligen Treppenstufe 2 an seiner Lasche eine nach unten weisende Nase aufweist, an welcher die Stabilisierungsstange 4 unterhalb des Niveaus der Unterseite der Treppenstufe 2 drehgelenkig angeschlagen ist.

Weiterhin zeigen insbesondere die Fig. 1a und 3b, dass die drehgelenkigen Verbindungen an den jeweiligen Schenkelenden 18, 19 um mindestens eine doppelte Handdicke 11 voneinander beabstandet sind und von Schraubverbindungen gebildet werden.

Insbesondere in Fig. 3 ist dargestellt, dass die Holme 3 an ihren bodenseitigen Enden jeweils einen quer zu ihrer Längsrichtung abstehenden Griff 20 aufweisen, wobei die Griffe 20 einander zugewandt sind. Diese Maßnahme hat den Vorteil, dass die Treppenleiter 1 beidhändig zwischen ihren jeweiligen Stellungen 9, 10 verstellt werden kann.

Insbesondere für eine besonders leichte Handhabung der Treppenleiter 1 sind zumindest die Holme 3 aus Aluminiumprofil. Hierzu ist denkbar, dass für die Führungsschienen 6 und für die Stabilisierungsstangen 4 ebenfalls Aluminiumprofil verwendet wird. Insbesondere Fig. 1 zeigt hierzu, dass die Führungsschienen 6 U-förmig ausgebildet sind.

### Bezugszeichenliste

- 1: Treppenleiter
- 2: Treppenstufe
- 3: Holm
- 4: Stabilisierungsstange
- 5: Führungsschlitten
- 6: Führungsschiene
- 7: Aufbewahrungsraum
- 8: Fahrzeug
- 9: einander zugewandte Bereiche
- 10: Bauteil
- 11: Handdicke
- 12: Längskante
- 13: Querkante
- 14: Längsseite eines Holms
- 15: Längsseite einer Stabilisierungsstange
- 16: Blechkonstruktion, Strangpressprofil
- 17: Seitenblech
- 18: hakenartiges Schenkelende
- 19: laschenartiges Schenkelende
- 20: Griff
- 21: Hand

## Patentansprüche

1. Treppenleiter (1) mit Treppenstufen (2), die jeweils mit ihren querseitigen Endbereichen an einem Paar sich gegenüberliegenden Holme (3) und einem Paar sich gegenüberliegender Stabilisierungsstangen (4) drehgelenkig angeschlagen sind, wobei die Stabilisierungsstangen (4) und die Holme (3) mit jeweils einem ihrer Enden drehgelenkig mit einem Führungsschlitten (5) verbunden sind, der zusammen mit den Stabilisierungsstangen (4) und den Holmen (3) auf Führungsschienen (6) laufend in einem Aufbewahrungsraum (7) eines Fahrzeugs (8) ein- und ausfahrbar gelagert ist, wobei zu diesem Zweck die Stabilisierungsstangen (4) und die Holme (3) parallel zueinander angeordnet sind und zusammen mit den Treppenstufen (2) gegeneinander aus einer im ausgefahrenen Zustand des Führungsschlittens (5) schrägen Gebrauchsstellung (9) der Treppenleiter (1) in eine horizontale Einschiebestellung (10) der Treppenleiter (1) einschwenkbar sind, wobei weiter die zwischen der Einschiebe- und Gebrauchsstellung (10, 9) einander zugewandten Bereiche (12, 13, 14, 15) unmittelbar benachbarter Bauteile nämlich der Treppenstufen (2), der Holme (3), der Stabilisierungsstangen (4) und des Führungsschlittens (5), voneinander beabstandet sind und die Treppenstufen als Blechkonstruktion oder Strangpressprofil, z. B. aus Aluminium und in einer Seitenansicht u-förmig ausgebildet sind, wobei zumindest die offenen Querseiten der Blechkonstruktion oder Strangpressprofils aus Aluminium oder auch z. B. aus Kunststoff mittels Seitenbleche verschlossen sind, **dadurch gekennzeichnet, dass** diese einander zugewandten Bereiche (12, 13, 14, 15) unmittelbar benachbarter Bauteile einen Mindestabstand von 1,8 cm aufweisen und dass die Seitenbleche in ihrer jeweiligen Längsrichtung L-förmig gebogen sind und dass einer der Schenkel der L-Form entgegen der Verschlussrichtung des Seitenbleches hakenartig ausgebildet ist und zur Anbringung der drehgelenkigen Verbindung mit einem der Holme (3) vorgesehen ist.

2. Treppenleiter (1) nach Anspruch 1, **dadurch gekennzeichnet, dass** die Treppenstufen (2) Querkanten (12) aufweisen, wobei einander zugewandte Querkanten (12) von unmittelbar benachbarten Treppenstufen (2) voneinander ebenfalls um mindestens 1,8 cm (11) beabstandet sind.

3. Treppenleiter (1) nach Anspruch 1 oder 2, **dadurch gekennzeichnet, dass** die Endbereiche der Treppenstufen (2) Längskanten (13) aufweisen, wobei die Längskanten (13) zur jeweils zugewandten Längsseite (14) eines unmittelbar benachbarten Holms (3) einen Abstand aufweisen, der ebenfalls mindestens 1,8 cm (11) entspricht.

4. Treppenleiter (1) nach Anspruch 3, **dadurch gekennzeichnet, dass** die Längskanten (13) zur jeweils zugewandten Längsseite (15) einer unmittelbar benachbarten Stabilisierungsstange (4) einen Abstand aufweisen, der ebenfalls mindestens 1,8 cm (11) entspricht.

5. Treppenleiter (1) nach einem der Ansprüche 1 bis 4, **dadurch gekennzeichnet, dass** einander zugewandte und unmittelbar benachbarte Längsseiten (14,15) eines Holms (3) und einer Stabilisierungsstange (4) voneinander ebenfalls um mindestens 1,8 cm (11) beabstandet sind.

6. Treppenleiter (1) nach einem der Ansprüche 1 bis 5, **dadurch gekennzeichnet, dass** die Stabilisierungsstangen (4) gegenüber ihren unmittelbar benachbarten Holmen (3) in Trittrichtung gesehen nach innen versetzt sind.

7. Treppenleiter (1) nach einem der Ansprüche 1 bis 6, **dadurch gekennzeichnet, dass** die Treppenstufen (2) mit ihren jeweiligen Unterseiten in der Einschiebestellung (10) in horizontaler Ausrichtung gegen die Oberseite der Stabilisierungsstangen (4) angeschwenkt sind und mit ihren Trittflächen auf einer gemeinsamen Horizontalebene liegen.

8. Treppenleiter (1) nach einem der Ansprüche 1 bis 7, **dadurch gekennzeichnet, dass** die Treppenleiter (1) in der Einschiebestellung (10) ausschließlich mit ihren Holmen (3) in die Führungsschienen (6) einschiebbar ist.

9. Treppenleiter (1) nach einem der vorhergehenden Ansprüche, **dadurch gekennzeichnet, dass** das andere Schenkelende (19) des Seitenbleches (17) entgegen der Verschlussrichtung laschenartig ausgebildet ist und zur Anbringung der drehgelenkigen Verbindung mit einer der Stabilisierungsstangen (4) vorgesehen ist.

10. Treppenleiter (1) nach einem der Ansprüche 1 bis 9, **dadurch gekennzeichnet, dass** die Holme (3) an ihren bodenseitigen Enden jeweils einen quer zu ihrer Längsrichtung abstehenden Griff (20) aufweisen, wobei die Griffe (20) einander zugewandt sind.

11. Treppenleiter (1) nach einem der Ansprüche 1 bis 10, **dadurch gekennzeichnet, dass** zumindest die Holme (3) aus Aluminiumprofil bestehen.

## Claims

1. Stepladder (1) comprising steps (2) which are each pivotally fastened, by the lateral end regions thereof, to a pair of opposing stringers (3) and to a pair of opposing stabilising rods (4), the stabilising rods (4) and the stringers (3) each being pivotally connected, by one of the ends thereof, to a guiding slide (5) which, together with the stabilising rods (4) and the stringers (3), is mounted so as to run on guiding rails (6) in a retractable and extendible manner in a storage space (7) of a vehicle (8), the stabilising rods (4) and the stringers (3) being, for this purpose, arranged in parallel with one another and, together with the steps (2), being pivotable relative to one other from a usage position (9) of the stepladder (1), which is oblique in the extended state of the guiding slide (5), into a horizontal insertion position (10) of the stepladder (1), the regions (12, 13, 14, 15) of directly adjacent components, namely the steps (2), the stringers (3), the stabilisation rods (4) and the guiding slide (5), which regions are mutually facing between the insertion and usage positions (10, 9), also being mutually spaced, and the steps being designed as a sheet metal structure or extruded profile, made of e.g. aluminium, and being U-shaped when viewed from the side, at least the open lateral sides of the sheet metal structure or extruded profile made of aluminium or even made of e.g. plastics material being closed by side plates, **characterised in that** said mutually facing regions (12, 13, 14, 15) of directly adjacent components are spaced by at least 1.8 cm, and **in that** the side plates are each bent in an L shape in the longitudinal direction thereof, and **in that** one of the legs of the L shape is formed in the manner of a hook counter to the closure direction of the side plate and is provided for fitting the pivotal connection to one of the stringers (3).

2. Stepladder (1) according to claim 1, **characterised in that** the steps (2) comprise lateral edges (12), mutually facing lateral edges (12) of directly adjacent steps (2) also being mutually spaced by at least 1.8 cm (11).

3. Stepladder (1) according to either claim 1 or claim 2, **characterised in that** the end regions of the steps (2) comprise longitudinal edges (13), the longitudinal edges (13) being spaced apart, also by at least 1.8 cm (11), from the longitudinal side (14), that faces said longitudinal edges, of a directly adjacent stringer (3) in each case.

4. Stepladder (1) according to claim 3, **characterised in that** the longitudinal edges (13) are spaced apart, also by at least 1.8 cm (11), from the longitudinal side (15), that faces said longitudinal edges, of a directly adjacent stabilising rod (4) in each case.

5. Stepladder (1) according to any of claims 1 to 4, **characterised in that** mutually facing and directly adjacent longitudinal edges (14, 15) of a stringer (3) and of a stabilising rod (4) are mutually spaced by at least 1.8 cm (11).

6. Stepladder (1) according to any of claims 1 to 5, **characterised in that**, when viewed in the stepping direction, the stabilising rods (4) are inwardly offset from the stringers (3) that are directly adjacent thereto.

7. Stepladder (1) according to any of claims 1 to 6, **characterised in that** the steps (2), with each of the lower faces thereof in the insertion position (10) and oriented horizontally, are pivoted against the upper face of the stabilising rods (4), and the stepping surfaces of said steps are on a common horizontal plane.

8. Stepladder (1) according to any of claims 1 to 7, **characterised in that**, in the insertion position (10), the stepladder (1) can be inserted into the guiding rails (6) only by means of the stringers (3) of said stepladder.

9. Stepladder (1) according to any of the preceding claims, **characterised in that** the other leg end (19) of the side plate (17) is formed in the manner of a bracket counter to the closure direction and is provided for fitting the pivotal connection to one of the stabilising rods (4).

10. Stepladder (1) according to any of claims 1 to 9, **characterised in that** the stringers (3) each comprise, at the bottom ends thereof, a handle (20) protruding transversely to the longitudinal direction of said stringers, the handles (20) facing one another.

11. Stepladder (1) according to any of claims 1 to 10, **characterised in that** at least the stringers (3) consist of an aluminium profile.

## Revendications

1. Marchepied (1), comprenant des marches d'escalier (2) qui sont chacune articulées de manière pivotante avec leurs régions d'extrémités transversales à une paire de montants opposés (3) et une paire de barres de stabilisation (4), dans laquelle les barres stabilisation (4) et les montants (3) sont chacun liés de manière pivotante avec une de leurs extrémités à un chariot de guidage (5) qui, ensemble avec les barres de stabilisation (4) et les montants (3), est logé dans un espace de stockage d'un véhicule (8) en étant déplaçable sur des rails de guidage (6) de manière à pouvoir être rentré et sorti, dans laquelle, à cette fin, les barres de stabilisation (4) et les montants (3) sont agencés parallèlement entre eux et sont aptes à être pivotés ensemble avec les marches d'escalier (2) les uns contre les autres depuis une position d'utilisation inclinée (9) du marchepied (1) à l'état sorti du chariot de guidage (5) dans une position d'insertion horizontale (10) du marchepied (1), dans laquelle en outre les régions qui se font faces (12, 13, 14, 15) entre la position d'insertion et d'utilisation (10, 9) des pièces immédiatement adjacentes, à savoir des marches d'escalier (2), des montants (3), des barres de stabilisation (4) et du chariot de guidage (5), sont espacées mutuellement et les marches d'escalier sont réalisées en construction de tôle ou en profilé extrudé, par exemple en aluminium, et ont une forme en U dans une vue de côté, dans laquelle au moins les côtés transversaux ouverts de la construction en tôle ou du profilé extrudé en aluminium ou aussi en plastique par exemple, sont fermés au moyen de tôles latérales, **caractérisé en ce que** ces régions qui se font faces (12, 13, 14, 15) des pièces immédiatement adjacentes présentent un espacement minimal de 1,8 cm et **en ce que** les tôles latérales sont courbées en L dans leur direction longitudinale respective et **en ce que** l'une des branches de la forme en L est réalisée en forme de crochet à l'encontre de la direction de fermeture de la tôle latérale et est prévue pour le montage de la liaison pivotante à l'un des montants (3).

2. Marchepied (1) selon la revendication 1, **caractérisé en ce que** les marches d'escalier (2) comprennent des bords transversaux (12), dans laquelle des bords transversaux (12) qui se font faces de marches d'escalier (2) immédiatement adjacentes sont également séparés entre eux d'au moins 1,8 cm (11).

3. Marchepied (1) selon la revendication 1 ou 2, **caractérisé en ce que** les régions d'extrémité des marches d'escalier (2) comprennent des bords longitudinaux (13), dans laquelle les bords longitudinaux (13) présentent un espacement par rapport à chaque côté longitudinal (14) en regard d'un montant (3) immédiatement adjacent lequel est aussi d'au moins 1,8 cm (11).

4. Marchepied (1) selon la revendication 3, **caractérisé en ce que** les bords longitudinaux (13) présentent un espacement par rapport à chaque côté longitudinal en regard d'une barre de stabilisation (4) immédiatement adjacente lequel est aussi d'au moins 1,8 cm (11).

5. Marchepied (1) selon l'une des revendications 1 à 4, **caractérisé en ce que** les côtés longitudinaux (14, 15) en regard et immédiatement adjacents d'un montant (3) et d'une barre de stabilisation (4) sont aussi espacés mutuellement d'au moins 1,8 cm.

6. Marchepied (1) selon l'une des revendications 1 à 5, **caractérisé en ce que**, vue dans la direction de marche, les barres de stabilisation (4) sont décalées vers l'intérieur vis-à-vis des montants (3) qui leur sont immédiatement adjacents.

7. Marchepied (1) selon l'une des revendications 1 à 6, **caractérisé en ce que** les marches d'escalier (2) sont pivotées avec leurs côtés inférieurs respectifs dans la position d'insertion (10) en orientation horizontale contre le côté supérieur des barres de stabilisation (4) et reposent avec leurs girons sur un plan horizontal commun.

8. Marchepied (1) selon l'une des revendications 1 à 7, **caractérisé en ce que** le marchepied (1) dans la position d'insertion est apte à être inséré dans les rails de guidage uniquement avec ses montants (3).

9. Marchepied (1) selon l'une des revendications précédentes, **caractérisé en ce que** l'autre extrémité de branche (19) de la tôle latérale (17) est réalisée en forme de patte à l'encontre de la direction de fermeture et est prévue pour le montage de la liaison pivotante à l'une des barres de stabilisation (4).

10. Marchepied (1) selon l'une des revendications 1 à 9, **caractérisé en ce que** les montants (3) présentent chacun à leurs extrémités inférieures une poignée (20) en extension transversalement à leur direction longitudinale, dans laquelle les poignées (20) se font face.

11. Marchepied (1) selon l'une des revendications 1 à 10, **caractérisé en ce qu'**au moins les montants (3) sont réalisés en profilé d'aluminium.
